# EUROPEAN PATENT SPECIFICATION

(11) **EP 2 773 707 B1**
(45) Date of publication and mention of the grant of the patent: **04.03.2015**
(21) Application number: 12780490.4
(22) Date of filing: 30.10.2012
(51) Int. Cl.: C09D 129/04, B32B 27/10, B65B 3/00, B65B 25/00, C09D 101/02, C09D 103/00, C09D 105/14, D21H 23/48

(54) **A COATING COMPOSITION, A METHOD FOR COATING A SUBSTRATE, A COATED SUBSTRATE, A PACKAGING MATERIAL AND A LIQUID PACKAGE**
BESCHICHTUNGSZUSAMMENSETZUNG, VERFAHREN ZUM BESCHICHTEN EINES SUBSTRATS, BESCHICHTETES SUBSTRAT, VERPACKUNGSMATERIAL UND FLÜSSIGKEITSPACKUNG
COMPOSITION DE REVÊTEMENT, PROCÉDÉ POUR LE REVÊTEMENT D'UN SUBSTRAT, SUBSTRAT REVÊTU, MATÉRIAU D'EMBALLAGE ET EMBALLAGE POUR DES PRODUITS LIQUIDES

(30) Priority: 31.10.2011 SE 1100821; 19.03.2012 SE 1250261
(43) Date of publication of application: 10.09.2014
(73) Proprietor: BillerudKorsnäs Skog & Industri Aktiebolag, 80181 Gävle (SE)
(72) Inventor: LARSSON, Johan, S-805 98 Gävle (SE); KARLSSON, Anders, S-802 54 Gävle (SE)
(74) Representative: Kransell & Wennborg KB
(86) International application number: PCT/EP2012/071495
(87) International publication number: WO 2013/064501

(56) References cited:
- WO-A1-2009/085136
- WO-A2-2006/010927
- US-A1- 2004 121 080
- US-A1- 2006 099 410
- Anonymous: "Technical Data Sheet: TERGITOL(TM) TMN-6 (90%) Surfactant", DOW , 13 March 2009 (2009-03-13), pages 1-2, XP055051489, Retrieved from the Internet: URL:http://msdssearch.dow.com/PublishedLit eratureDOWCOM/dh_0234/0901b8038023484a.pdf ?filepath=surfactants/pdfs/noreg/119-01939 .pdf&fromPage=GetDoc [retrieved on 2013-01-29]
- Anonymous: "Surfynol CT-211 Grind Aid", Air Products , 1 January 2002 (2002-01-01), XP055051380, Retrieved from the Internet: URL:http://www.airproducts.com/~/media/dow nloads/s/surfynol-ct-211/data-sheets/en-su rfynol-CT-211-datasheet-l5870-ct-211.pdf?p roductType=Chemicals&productLevel1=Surfact ants&productLevel2=Wetting-Agent&productLe vel3=Surfynol-CT-211 [retrieved on 2013-01-28]
- ANONYMOUS: "DuPont Zonyl FSN - Fluorosurfactant", DUPONT MAGAZINE, 24 August 2003 (2003-08-24), pages 1-2, XP003000256, DU PONT DE NEMOURS AND CO., WILMINGTON, DE, US ISSN: 0046-0834
- Anonymous: "Surfynol SE-F Surfactant", Air Products , 1 January 2002 (2002-01-01), XP055051367, Retrieved from the Internet: URL:http://www.airproducts.com/~/media/dow nloads/s/surfynol-se-f/data-sheets/en-surf ynol-se-f-datasheet.pdf?productType=Chemic als&productLevel1=Surfactants&productLevel 2=Wetting-Agent&productLevel3=Surfynol-SE- F [retrieved on 2013-01-28]
- Anonymous: "LUTENSOL TO types", BASF Speciality Chemicals, Technical Information, 1 February 1997 (1997-02-01), pages 1-15, XP055001280, Germany Retrieved from the Internet: URL:http://www.timing-ouhan.com/images/lut ensoltotypes_.pdf [retrieved on 2011-06-23]
- Roland Böhn: "Lutensol XL and Lutensol XP", Speciality Surfactants Group Meeting, 11 March 2004 (2004-03-11), pages 1-26, XP055051592, Retrieved from the Internet: URL:http://www.lubricantindex.co.uk/Basf/L utensolxp.xl.bacs.pdf [retrieved on 2013-01-29]
- ANONYMOUS: "Lutensol ON types", BASF TECHNICAL INFORMATION, March 2005 (2005-03), pages 1-12, XP002691149, Ludwigshafen, Germany
- Anonymous: "NanoSeal TM - Barrier Coating - Product Description: NSC-100A (Provisional Technical Data Sheet)", NANOPACK INC. , 20 April 2010 (2010-04-20), XP002691150, Retrieved from the Internet: URL:http://wayback.archive.org/web/2011042 3145505/http://www.nanopackinc.com/product s.asp [retrieved on 2013-01-29]

## Description

### Technical field of the invention

The present invention relates to a coating composition comprising a polymer and a surfactant, wherein the polymer is selected from a group consisting of polyvinyl alcohol and polysaccharides, or mixtures thereof. In particular it relates to a gas barrier coating composition suitable for curtain coating. The present invention also relates to a method for providing a substrate with a gas barrier layer by means of the coating composition, a coated substrate, a packaging material comprising a coated paperboard, and a liquid package comprising such a packaging material.

### Background of the invention

Curtain coating is a coating process in which a linear flow of a liquid coating composition is deposited on a surface of a moving substrate, such as paper web. The coating composition forms a liquid sheet that falls freely before impinging onto the moving substrate that is to be coated.

Curtain coating is a technique well suited for coating a paper web with a liquid barrier layer, since the barrier substance must form a film that covers the surface entirely, or as close to entirely as possible. However, the curtain coating process is susceptible to certain defects, such as irregular heel formation, air entrainment and curtain instabilities that may result in a coated surface that displays smaller or bigger areas that lacks coating. In order to discover such defects in the coverage of the coating, which can be very small due to e.g. air bubbles in the liquid coating, a test may be made by applying a coloured test liquid onto the coated surface. Any defects will then appear as coloured areas or so called pinholes. For some applications it is particularly important that the coating does not contain any defects or at least very few defects, for example in the food industry and for liquid packages (i.e. packages containing liquids).

It is previously known that polysaccharides and polyvinyl alcohol are good barriers against gases. A coating comprising polysaccharides and/or polyvinyl alcohol deposited on a substrate is known to be suitable as a barrier against oxygen, odours, aromas, etc. in for example packaging material based on paperboard substrate.

In curtain coating a suitable dynamic surface tension, calculated from Mach-angle measurements in the falling curtain, is required in order for the free falling curtain of coating liquid to form a stable curtain and not to have defects in the form of holes. Typically, for Newtonian fluids, the coating liquid should have a dynamic surface tension of less than 40mNm to satisfy the criteria of a falling curtain without the formation of holes. However, polysaccharides and polyvinyl alcohol, which are non-Newtonian fluids does have a considerably higher surface tension which leads to an instable curtain at low flow rates.

In order to reduce the surface tension of polyvinyl alcohol it has been proposed to add a surface active substance, a surfactant, to the polyvinyl alcohol, for example as described in EP 2182113, using a surfactant of the type Air Products EnviroGem^{®} AE03. However, it has been found that even though the stability of the curtain improved when using a surfactant, the barrier effect of the coating deteriorated, and to such a degree that it was not usable for producing liquid packages. As other examples, it has been proposed to add relatively large amounts of ethanol or similar alcohol to the polyvinyl alcohol, but this is however not a satisfying solution of the coating problem in the paper industry since it requires handling and recycling of resulting volatile organic compounds (VOC).

To summarise, in order to use curtain coating to obtain a barrier on a substrate, such as a polyvinyl alcohol or polysaccharide barrier on a fibre substrate, e.g. paperboard, it is necessary to use added substances that reduces the dynamic surface tension in order to have a stable process, but these substances will at the same time have a negative effect on the film formation and therefore the barrier will be defective.

US 2004/0121080 relates to a method of producing a coated substrate. The method comprises the steps of forming a free flowing curtain and contacting the curtain with a continuous web substrate. The curtain has at least one component capable of reacting. One of many compositions described in US 2004/0121080 comprises starch and a surfactant (TERGITOL^{®} TMN-6) and has a solids content of 20 %.

WO 2006/010927 relates to a curtain coating process for coating substrates with a stable curtain and a uniform coating at low flow rates, wherein a free-falling curtain of an aqueous composition comprising a high solids content is coated onto the moving substrate at a certain flow rate per unit die length value. The high solids content composition comprises a polymeric rheology modifier and a non-ionic surfactant. Two examples in WO 2006/010927 show compositions comprising PVOH and a surfactant (Surfynol^{®} CT211). The compositions have a solids content of 63.5 and 65.5 %, respectively.

WO 2009/085136 relates to a coating composition comprising a dispersion of fine particles of silica having a particle size of less than 300 nm, hydrophilic hydroxy-containing polymer, a first non-ionic surfactant comprising an alcohol containing perfluoroalkyl repeat units and ethylene oxide repeat units, and a second non-ionic surfactant selected from the group consisting of non-fluorine-containing surfactants that comprise a hydrophobic moiety and a hydrophilic moiety comprising hydroxy groups, wherein the hydroxy number of the second non-ionic surfactant is greater than 300. Also disclosed is an ink jet recording element so-coated. The invention can provide high image quality (reduced coalescence) of the inkjet recording element or increased stability of the coating composition. One coating dispersion in WO 2009/085136 comprises PVOH, ZONYL^{®} FS-300, which is an "ethoxylated nonionic fluorosurfactant" and a high amount of silica particles.

US 2006/0099410 relates to a method of providing an oil and grease resistant coating to a substrate. The method includes the steps of: (i) providing a substrate with a first and second surface to a coating station; (ii) curtain coating at least one surface of the substrate with an aqueous polyvinyl alcohol composition to form a nascent polyvinyl alcohol barrier film thereon; and (iii) drying the nascent polyvinyl alcohol barrier film to form a polyvinyl alcohol oil and grease barrier coating; wherein the polyvinyl alcohol composition as well as the substrate and coating and drying conditions are selected such that the polyvinyl alcohol oil and grease barrier coating is substantially pinhole free. The barrier coating exhibits a TAPPI 559 kit test rating of at least 7.

### Summary of the invention

An object of the present invention is to provide an improved coating composition suitable for curtain coating, in particular for the above mentioned fields of application.

Another object is to obtain a coating that will result in a final product that is suitable for the food industry, that is free of any toxic or unhealthy substances, and which is safe to use. Moreover, when used in a packing material, it must not contain any substances that can migrate into the food product or emit any smells or aromas when used in food or liquid packages.

The objects are achieved by the present invention.

According to a first aspect of the present invention is defined a curtain coatable gas barrier coating composition comprising a polymer and a surfactant, wherein the polymer is selected from polysaccharides, wherein said polysaccharides are soluble or dispersable or suspendable in water and the surfactant is a water soluble non-ionic ethoxylated alcohol,the solids content of the composition is 4-15 % and the surfactant has the formula RO(CH₂CH₂O)ₓH, wherein, R is iso-C₁₃H₂₇ and x is 8 or higher, or R is iso-⁴C₁₀ and x is 5, 6, 7, 8, or 11. This coating composition makes it possible to obtain a stable curtain with a low number of pinholes in the coating of a coated substrate, such as a fibre substrate, e.g. a paperboard. This coating provides good barrier qualities against gases, e.g. oxygen, aromas and odours.

Preferably, the polysaccharides may comprise starch, starch derivatives, MFC (micro fibrillar cellulose) and hemicellulose.

According to one embodiment of the present invention, the polymer comprises polyvinyl alcohol in a mixture with starch and/or a starch derivative and/or MFC and/or hemicellulose.

According to another embodiment, the polymer comprises starch alone, or a starch derivative alone, or a mixture thereof, or either one in mixture with MFC and/or hemicellulose.

According to yet another embodiment, the polymer comprises MFC alone or hemicellulose alone, or a mixture thereof.

The coating composition may comprise a concentration of 0.05 - 2.0 weight% of non-ionic ethoxylated alcohol surfactant, preferably 0.1-1,0%, and more preferably 0.2-0.5 weight%, of the total weight of the bone dry coating composition.

The solid content of the composition may preferably be 7-15%, or 6-12%, or even 8-10%. The balance is water.

Further, the coating composition may comprise platy particles, for example it may comprise Montmorillonite clay in nano particle form. This has the advantage of improving the gas barrier function. The clay or other suitable platy or nano form additives may be added to the polyvinyl alcohol in an amount of 1-20% dry weight of the total dry weight of the composition, preferably 3-15% and more preferably 5-10%.

The coating composition may preferably comprise a weight percentage of approximately 80-99.5% of dry matter in the composition constituted by a polymer chosen as the main component, and the amount of additives to the main component, such as other polymers or platy particles and surfactant, have a weight percentage of approximately 0.05-20% of dry matter in the composition.

Preferably, the weight percentage of the polymer chosen as the main component is 85-98%, and the weight percentage of the additives is 2-15%. However, it should be emphasized that any combination of the mentioned substances, and in any weight proportions, is conceivable within the frame of the invention.

According to a second aspect of the invention is defined a method for providing a substrate with a gas barrier layer in at least one coating step, comprising application of a coating composition as defined in any one of the claims defining the coating composition, by curtain coating the substrate with the coating composition in at least one coating step.

Accordingly, the method may comprise only one coating step of applying a coating layer of the described composition of any of the mentioned polysaccharides (starch, starch derivative, MFC, hemicelluloses) alone, or of mixtures thereof wherein polyvinyl alcohol is the main component or starch or starch derivative or MFC or hemicellulose is the main component. Any combination is foreseeable.

The method may further comprise a second step of applying a second coating layer with a composition chosen from all the above mentioned possibilities. Usually there will be a drying step after each coating step. The coating composition chosen for the first and second layer may be the same coating composition or different coating compositions.

The method may comprise curtain coating the substrate in a first step with a coating composition comprising a polysaccharide and in a second step with a coating composition comprising a polysaccharide.

In another alternative, the method may comprise curtain coating the substrate in a first step with a coating composition containing a polysaccharide and in a second step with a coating composition comprising polyvinyl alcohol.

In yet another alternative, the method may comprise curtain coating the substrate in a first step with a coating composition containing polyvinyl alcohol and in a second step with a coating composition comprising a polysaccharide.

In still a further alternative, the method may comprise curtain coating the substrate in a first step with a coating composition comprising polyvinyl alcohol, MFC, clay in nano particle form and a water soluble non-ionic ethoxylated alcohol, and curtain coating the substrate in a second step with a coating composition comprising starch or a starch derivative and a water soluble non-ionic ethoxylated alcohol. The opposite order of the coatings is also possible.

In another alternative, the method may comprise curtain coating the substrate in a first step with a coating composition comprising polyvinyl alcohol, hemicellulose, clay in nano particle form and a water soluble non-ionic ethoxylated alcohol, and curtain coating the substrate in a second step with a coating composition comprising starch or a starch derivative and a water soluble non-ionic ethoxylated alcohol or vice versa.

Additional coating steps are of course also foreseeable, and any combination of layers of the same or different coating compositions, from the whole range of possible coating compositions, is possible. An example of an additional coating step is a pigment coating step, which may very well be made before coating with the gas barrier coating composition.

Further, the coat weight of the at least one coating layer may be 0.4 g/m² or more and less than 7.0 g/m². The coat weight of the barrier layer may be 0.8 g/m² or more and less than 7.0 g/m², and preferably 1.2 - 4.0 g/m², and even more preferably 1.6 - 3.2 g/m².

According to one feature, the substrate may be a fibre substrate or a paper or a paperboard. However, it is conceivable to implement the invention on other substrates, without going beyond the scope of the invention.

According to a third aspect of the present invention is defined a coated substrate having at least one gas barrier layer obtained by coating a substrate with a coating composition as defined in any one of claims defining the coating composition.

The gas barrier layer may be a barrier against oxygen in particular, and gases including odours and/or aromas.

Further, the coated substrate may have a gas barrier layer that has a coat weight of 0.8 or more and less than 7.0 g/m² and preferably 1.2 - 4.0 g/m², and even more preferably 1.6 - 3.2 g/m².

In one embodiment, the coated substrate may be a paperboard comprising at least one fibre based layer coated with the coating composition. Alternatively, the substrate may be a paper or any other substrate requiring the concerned type of barrier.

According to a fourth aspect of the present invention, is defined a packaging material comprising a coated paperboard as defined above, further comprising a layer of low density polyethylene on each side of the coated paperboard, and having an OTR value measured at 23 °C and 50 % RH of less than 40 ml/m²*24h*1atm, or preferably even less than 10 ml/m²*24h*1atm. OTR stand for oxygen transmission rate and the instrument used for the measurement is Mocon Ox Tran 2/21.

According to a fifth aspect of the present invention is defined a liquid package made from a packaging material as defined above.

As mentioned before, typically, for Newtonian fluids, the coating liquid should have a dynamic surface tension of less than 40mNm to satisfy the criteria of a falling curtain without the formation of holes. However, according to the present invention it has been advantageously found that polysaccharides and polyvinyl alcohol, which are non-Newtonian fluids, do not necessary need as low surface tension as Newtonian fluids due to their elasticity. There is then a need to obtain a good relationship between the flow rate and the surface tension and the non-newtonian fluid characteristics. Some common concepts of curtain stability are the minimum flow which can be reached without rupture of the liquid curtain and the minimum flow at which the curtain heals itself to a completely defect free liquid curtain. In accordance with the present invention, it has surprisingly been found that the surface tension for polysaccharides and polyvinyl alcohol may have dynamic surface tension values of up to 50 mNm, and still have a defect free operation even at very low flow rates such as lower than 4.0 litres/minute*meter.

Further features and advantages will become apparent from the following detailed description of the invention and test examples.

### Brief description of the drawings

The invention will now be described in more detail, with reference being made to test examples and the enclosed schematic drawings illustrating different aspects and embodiments of the invention, given as examples only, and in which:
Figs. 1a-1d shows schematically examples of a coated substrate according to the present invention, and
Figs. 2a-2d shows schematically examples of a packaging material according to the present invention.

### Detailed description of the invention

During the search for a suitable surfactant and a suitable method, many different commercially available surfactants were tested that were alleged to be suitable for curtain coating. However, they were all found unsuitable since they all failed either in providing a stable curtain or in providing a sufficiently good barrier.

After having performed many tests it was surprisingly found a group of surfactants that managed to provide the desired result of a stable curtain and a high quality barrier with an acceptable low amount of pinholes. This group of surfactants was non-ionic ethoxylated alcohols, such as sold under the trade names of Lutensol^{®} ON and Lutensol^{®} TO, by BASF. In particular Lutensol^{®} ON50, Lutensol^{®} ON70 and Lutensol^{®} TO8 were found to provide the required results.

According to the product information supplied by BASF, the Lutensol^{®} ON types are non-ionic surfactants. They are alkyl polyethylene glycol ethers made from a saturated synthetic, short-chain fatty alcohol. They conform to the following formula:

RO(CH2CH2O)xH,

where
R = saturated, synthetic, short-chain fatty alcohol
x = 3, 5, 6, 7, 8 or 11

The numeric code in the product name usually indicates the degree of ethoxylation. The Lutensol^{®} ON types are manufactured by causing the fatty alcohol to react with ethylene oxide in stoichiometric proportions. The ethoxylation temperature is kept as low as possible. This, combined with the high purity of the feedstocks, ensures that high-performance products with low toxicity are obtained. According to additional information available from BASF, R may be iso-C10.

According to the product information supplied by BASF, the Lutensol^{®} TO types are non-ionic surfactants. They are made from a saturated iso-C13 alcohol. They conform to the following structural formula:

RO(CH2CH2O)xH,

where
R = iso-C13 H27
x = 3, 5, 6, 6.5, 7, 8, 10, 12, 15 or 20

The numeric code in the product name indicates the degree of ethoxylation. The Lutensol^{®} TO types are manufactured by causing the iso-C13 oxo alcohol to react with ethylene oxide in stoichiometric proportions. The ethoxylation temperature is kept as low as possible. This, combined with the high purity of the feedstocks, ensures that high-performance products with low toxicity are obtained.

In the case of Lutensol^{®} ON50, x (the degree of ethoxylation) is 5, and in the case of Lutensol^{®} ON70, x is 7. A Lutensol^{®} ON having a lower molecular weight, Lutensol^{®} ON30 (x=3), was also tested but did not result in the desired effects.

In the case of Lutensol^{®} TO8, x is 8. Lutensol^{®} TO8 has a molecular weight of approximately 600g/mol. Also for this group, a Lutensol^{®} TO having a lower molecular weight, Lutensol^{®} TO6 (x=6), was also tested but did not result in the desired effects.

The non-ionic ethoxylated alcohols having the desired effect are water soluble and provide relatively slow wetting. Lutensol^{®} ON30 and TO6, on the other hand, are not water soluble. Lutensol^{®} ON is water soluble for a degree of ethoxylation of 5 and above, while Lutensol^{®} TO is water soluble for a degree of ethoxylation of 8 and above.

Tests with good and satisfying results were performed with a liquid coating composition comprising polyvinyl alcohol, of which a solution was prepared according to the instructions on the particular product, and to which solution the concerned surfactant was added according to the following:
Concentration of surfactant (weight% of added surfactant as from package of the weight of the total bone dry composition): 0.05 - 2%; preferably 0.1-1.0% or even 0.2 - 0.5%;
Solid content of the composition: 4-15%; preferably 7-15%, or even 8-10%.

The tests were made by depositing the liquid coating composition on a fibre based moving web in a curtain coating process. The web was paperboard.

Test results are listed in Table 1. The results in the table are measured on paperboard coated in a curtain coating process with two layers of the coating composition according to the invention, each layer being equal or not in coat weight to the other layer, totalling 2.0 - 5.0 g/m². In this table are also shown comparative tests performed with a coating comprising polyvinyl alcohol (PVOH) alone and a coating composition comprising polyvinyl alcohol and the by Cytec, USA, commercially available surfactant Aerosol^{®} OT75 comprising "Sodium dioctyl sulfosuccinate", which did not result in a satisfying gas barrier.

**Table 1: Test examples**

| Coating composition | Coat weight g/m2 | Visual observation | Curtain stability | KIT-number | Pinholes /dm2 | AO2IR ml/dm2* 24h | OTR ml/m2*24 h*1atm |
|---|---|---|---|---|---|---|---|
| PVOH | 3.2 | OK at high flow rate only | Holes in the film | 1 | 237 | 1817 | 5.8 |
| PVOH+0.2% Aerosol^{®} OT75 | 2.4 | OK | OK | 1 | 252 | 5152 | 61.8 |
| PVOH+0.5% Lutensol^{®} ON50 | 3.2 | OK | OK | 3 | 108 | 556 | 4.9 |
| P\/OH+10% Cloisite^{®}+0.5% Lutensol^{®} ON50 | 3.2 | OK | OK | 3 | 99 | 397 | 2.6 |
| PVOH+0.3% Lutensol^{®} ON70 | 3.0 | OK | OK | - | 4 | 51 | 7 |
| PVOH+10% Cloisite^{®}+0.3% Lutensol^{®} ON70 | 2.0 | OK | OK | 12 | 4 | 94 | 5.2 |
| PVOH+10% Cloisite^{®}+0.3% Lutensol^{®} ON70 | 3.0 | OK | OK | 12 | 3 | 13 | 2.9 |
| PVOH+10% Cloisite^{®}+5% MFC+0.3% Lutensol^{®} ON70 | 3.2 | OK | OK | 5 | 84 | 511 | 6.2 |
| First layer PVOH+10%Cloisite^{®}+5% MFC+0.3%Lutensol^{®} ON70) + Second layer (Starch+0.2%Lutensol^{®} ON70) | 3.2 (1.6+1.6) | OK | OK | 7 | 39 | 552 | 8.1 |
| Starch+0.2% Lutensol^{®} ON70 | 5.0 | OK | OK | 5 | 327 | 881 | 31.0 |

| | | | | | | | |
|---|---|---|---|---|---|---|---|
| KIT= TAPPI T 559 KIT test (repellency of paper and board to grease, oil, and waxes) AO2IR is short for Ambient Oxygen Ingress Rate which is a method for measuring oxygen gas transmission with a Perm-Mate instrument supplied by PBI Dansensor or Systech Illinois. OTR is short for Oxygen Transmission Rate, measured at 23°C and 50% RH by the instrument Mocon Ox Tran 2/21. A low KIT number indicates resistance only against fat; a high KIT number indicates high resistance against fat and solvents. A low AO2IR value indicates high resistance against gas transmission. The OTR is measured on a packaging material comprising the inventive coated paperboard provided with a polyethylene layer of 30g/m2. A low OTR value indicates good barrier function. | | | | | | | |

The coating composition may also comprise Montmorillonite clay, as mentioned before, or talc, kaolin clay or other similar solid additives in platy form or nano-particle form, while maintaining good barrier results, which has also been proven in tests. The tests performed with Montmorillonite (Cloisite^{®}) are also shown in Table 1. The clay or other suitable platy or nano form additives may be added to the polyvinyl alcohol in an amount of 1-20% dry weight of the total dry weight of the composition, preferably 3-15% and more preferably 5-10%.

Particularly good barrier results are the results showing a value of the oxygen transmission rate (OTR) of less than 40 ml/m2*24h*1atm, or even less than 10 ml/m2*24h*1atm.

The same tests were also made in which polyvinyl alcohol was exchanged for starch. Also the liquid coating composition comprising starch and surfactant showed good test results with an OTR of less than 40 ml/m2*24h*1atm, as can be seen in the table.

In addition, the same tests were performed in which a coating had been obtained by having a first layer with a liquid composition comprising polyvinyl alcohol, Montmorillonite clay and MFC together with a surfactant, and a second layer with a liquid composition comprising starch and a surfactant. This coating also resulted in good and satisfying test results, as shown in table 1.

It can be foreseen that, based on the good test results with starch and MFC, also hemicelluloses, primarily Xylanes and Xyloglucanes, which are also known to be good barriers alone or in mixture, can be used in the same way as starch and MFC.

The tests were performed with a velocity of the web substrate between 420 and 850 m/min with good results. With a curtain flow rate of at least 6 I/min*m and stable curtain conditions, it can be shown that it is theoretically possible to have a velocity of 250-1500 m/min, or even more, with a coat weight of 0.4 - 4.0 g/m² applied in two layers, totalling 0.8 - 8.0 g/m², and achieve satisfactory barrier results.

It should be generally understood that the present invention is not limited to the surfactant products with the above trade names, but there may be similar/corresponding products sold under other trade names by other suppliers or manufacturers which will work accordingly. It should also be mentioned that a possibility is foreseen to mix two or more surfactants, and it can also be foreseen that other components may be added to the coating composition, without departing from the scope of the present invention.

The polyvinyl alcohols used for the tests were supplied from Kuraray Nordic Oy in the form of product range Mowiol^{®} 6/98, 15/99 and 28/99, and it was prepared by dissolving in hot water according to the supplier's instructions. The starch used was a hydroxipropylated oxidized starch product Solcoat P150 supplied by Solam AB. The starch was prepared by dissolving in hot water according to the suppliers instructions. The microfibrillar cellulose (MFC) was supplied by Innventia AB and was supplied as a fibre suspension ready to use. The Montmorillonite clay was supplied by Southern Clay Products, USA in the form of the product Cloisite^{®} Na+. Tests were also made with kaolin clay and talc, with similar good results as with Montmorillonite. The kaolin clay used was supplied by Imerys in the form of Product Barrisurf™ LX. The talc used was supplied by FinnTalc Oy in the form of the product Finntalc C10B. It should be clear that also other similar types of polyvinyl alcohols, and other brands of the mentioned substances may be used without departing from the scope of the present invention. It is concluded that the present invention makes it possible to obtain a barrier coated paperboard that is suitable for liquid packages, in which the polyvinyl alcohol/polysaccharide layer provides an oxygen barrier and other additional layers, e.g. polyethylene, provides a liquid barrier and sealing properties.

The concerned liquid coating composition can generally be prepared by adding the used polymer or polymers (polyvinyl alcohol and/or polysaccharides) and also Montmorillonite (or talc or kaolin clay) when applicable, in powder form to cold water. If MFC or hemicellulose is used it is generally in pre-suspended form. Thereby a liquid is obtained in which the added substances are dissolved or suspended or dispersed in water. The liquid is then heated. After preparation, the liquid shall be allowed to cool down before the surfactant is added and then the resulting composition is ready to be used in the curtain coating process. Alternatively, each of the substances may prepared by itself, e.g. be dissolved (or suspended or dispersed in cold water) before mixing the substances with each other, heating and then adding the surfactant in order to obtain the final composition.

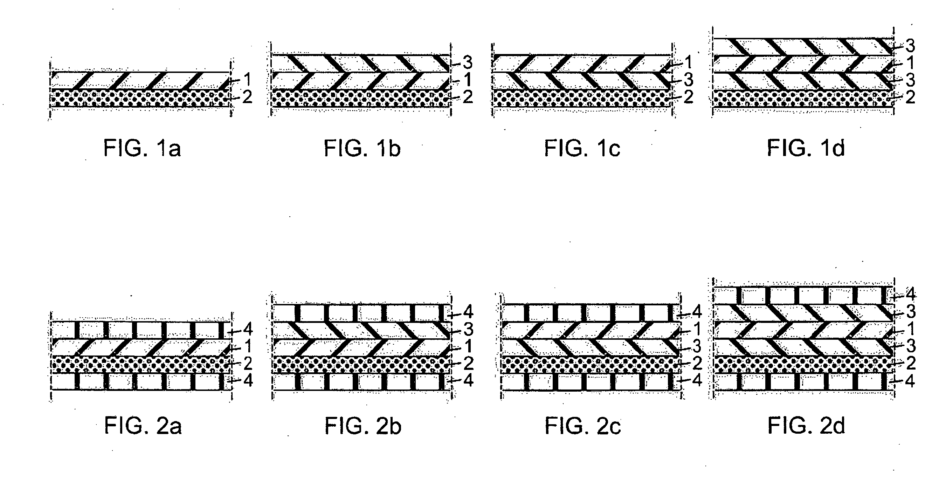

In Figs. 1a-1d is schematically illustrated examples of a coated substrate according to the present invention. In fig. 1a is shown a coated substrate where the substrate 1 is a paperboard comprising at least one fibre based layer, and the paperboard is coated with a gas barrier coating layer 2 comprising a coating composition according to the present invention. In Fig. 1b, the coated substrate is further provided with a pigment coating layer 3 on the opposite side of the paperboard layer 1, i.e. on that side of the paperboard layer 1 that is not coated with the barrier coating 2. In Fig. 1c, the coated substrate of Fig. 1a is also provided with a pigment coating layer 3, but in this example the pigment coating layer 3 is provided between the paperboard layer 1 and the barrier coating layer 2. Consequently, the barrier coating 2 has been applied on top of the already applied pigment coating layer 3. Finally, in Fig. 1d, the coated paperboard of Fig. 1c has been provided with an additional pigment coating layer 3, resulting in a paperboard layer 1 having a pigment coating layer 3 on both sides and a barrier coating layer 2 applied on one of the pigment coating layers 3.

Figs. 2a-2d shows schematically examples of a packaging material according to the present invention. Figs. 2a-2d illustrates a coated substrate corresponding to Figs. 1a-1d respectively, which has been provided with a polyethylene layer 4 on both sides.

## Claims

1. A curtain coatable gas barrier coating composition comprising a polymer selected from polysaccharides and a surfactant, wherein said polysaccharides are soluble or dispersable or suspendable in water and the surfactant is a water soluble non-ionic ethoxylated alcohol, **characterized in that** the solids content of the composition is 4-15% and the surfactant has the formula
RO(CH₂CH₂O)_{X}H,
wherein:
R=iso-C₁₃H₂₇ and x is 8 or higher; or
R=iso-C₁₀ and x is 5, 6, 7, 8 or 11.

2. A coating composition according to claim 1, comprising a mixture of a polysaccharide and PVOH.

3. A coating composition according to any one of claims 1-2, **characterized in that** the polysaccharides comprise starch, starch derivatives, MFC (micro fibrillar cellulose) or hemicellulose.

4. A coating composition according to claim 3, **characterized in that** the polymer comprises polyvinyl alcohol in a mixture with starch and/or a starch derivative and/or MFC and/or hemicellulose.

5. A coating composition according to claim 3, **characterized in that** the polymer comprises starch alone, or a starch derivative alone, or a mixture thereof, or either one in mixture with MFC and/or hemicellulose.

6. A coating composition according to claim 3, **characterized in that** the polymer comprises MFC alone or hemicellulose alone, or a mixture thereof.

7. The coating composition according to any one of the preceding claims, **characterized in that** it comprises a concentration of 0.05 - 2.0 weight% of non-ionic ethoxylated alcohol surfactant, preferably 0.1-1.0%, and more preferably 0.2 - 0.5 weight%, of the total weight of the bone dry coating composition.

8. The coating composition according to any one of the preceding claims, **characterized in that** it comprises platy particles.

9. The coating composition according to claim 8, **characterized in that** it comprises Montmorillonite clay in nano particle form.

10. The coating composition according to any one of the preceding claims, **characterized in that** it comprises a weight percentage of 80-99.5% of dry matter in the composition constituted by a polymer chosen as the main component, and that the amount of additives to the main component, such as other polymers or platy particles and surfactant, have a weight percentage of 0.05-20% of dry matter in the composition.

11. A method for providing a substrate with a gas barrier layer applied in at least one coating step, comprising application of a coating composition as defined in any one of claims 1-10, by curtain coating the substrate with the coating composition in at least one coating step.

12. A coated substrate having at least one gas barrier layer (2) obtained by coating a substrate (1) with a coating composition comprising a polymer selected from polysaccharides and a surfactant, wherein said polysaccharides are soluble or dispersable or suspendable in water and the surfactant is a water soluble non-ionic ethoxylated alcohol, **characterized in that** the surfactant has the formula
RO(CH₂CH₂O)_{X}H, wherein:
R=iso-C₁₃H₂₇ and x is 8 or higher; or
R=iso-C₁₀ and x is 5, 6, 7, 8 or 11.

13. The coated substrate according to claim 12, wherein the gas barrier layer (2) has a coat weight of 0.8 g/m² or more and less than 7.0 g/m².

14. The coated substrate according to any one of claims 12-13, wherein the substrate (1) is a paperboard comprising at least one fibre based layer coated with the coating composition.

15. A packaging material comprising a coated paperboard according to claim 14, further comprising a layer (4) of low density polyethylene on each side of the coated paperboard, and having an OTR value measured at 23°C and 50% RH with a Mocon Ox Tran 2/21 instrument of less than 40 ml/m²_{*}24h_{*}1atm, and preferably less than 10 ml/m²_{*}24h_{*}1atm.

16. A liquid package made from a packaging material according to claim 15.

## Patentansprüche

1. Beschichtungs- bzw. Streichzusammensetzung für eine mit Vorhang-Streichverfahren (Curtain Coating) beschichtbare Gasbarriere, umfassend ein aus Polysacchariden ausgewähltes Polymer und ein Tensid, wobei die Polysaccharide in Wasser löslich oder dispergierbar oder suspendierbar sind, und das Tensid ein wasserlöslicher nichtionischer ethoxylierter Alkohol ist, **dadurch gekennzeichnet, dass** der Feststoffgehalt der Zusammensetzung 4-15% beträgt und das Tensid die Formel
RO(CH₂CH₂O)ₓH
hat, wobei:
R = iso-C₁₃H₂₇ und x 8 oder höher ist; oder
R = iso-C₁₀ und x 5, 6, 7, 8 oder 11 ist.

2. Beschichtungszusammensetzung nach Anspruch 1, umfassend ein Gemisch von einem Polysaccharid und PVOH.

3. Beschichtungszusammensetzung nach irgendeinem der Ansprüche 1 bis 2, **dadurch gekennzeichnet, dass** die Polysaccharide Stärke, Stärkederivate, MFC (mikrofibrillierte Cellulose) oder Hemicellulose umfassen.

4. Beschichtungszusammensetzung nach Anspruch 3, **dadurch gekennzeichnet, dass** das Polymer Polyvinylalkohol in einem Gemisch mit Stärke und/oder einem Stärkederivat und/oder MFC und/oder Hemicellulose umfasst.

5. Beschichtungszusammensetzung nach Anspruch 3, **dadurch gekennzeichnet, dass** das Polymer Stärke allein, oder ein Stärkederivat allein, oder ein Gemisch davon, oder eines davon im Gemisch mit MFC und/oder Hemicellulose umfasst.

6. Beschichtungszusammensetzung nach Anspruch 3, **dadurch gekennzeichnet, dass** das Polymer MFC allein oder Hemicellulose allein, oder ein Gemisch davon umfasst.

7. Beschichtungszusammensetzung nach irgendeinem der vorhergehenden Ansprüche, **dadurch gekennzeichnet, dass** sie eine Konzentration von 0,05-2,0 Gewichts-% an nichtionischem ethoxyliertem Alkohol-Tensid, vorzugsweise 0,1-1,0% und stärker bevorzugt 0,2-0,5 Gewichts-%, des Gesamtgewichts der knochentrocknen Beschichtungszusammensetzung umfasst.

8. Beschichtungszusammensetzung nach irgendeinem der vorhergehenden Ansprüche, **dadurch gekennzeichnet, dass** sie plattenförmige Teilchen umfasst.

9. Beschichtungszusammensetzung nach Anspruch 8, **dadurch gekennzeichnet, dass** sie Montmorillonit-Ton in Nanoteilchenform umfasst.

10. Beschichtungszusammensetzung nach irgendeinem der vorhergehenden Ansprüche, **dadurch gekennzeichnet, dass** sie einen Gewichtsprozentsatz von 80-99,5% Trockensubstanz in der Zusammensetzung umfasst, die durch ein als die Hauptkomponente ausgewähltes Polymer festgelegt ist, und dass die Menge an Additiven zu der Hauptkomponente, beispielsweise andere Polymere oder plattenförmige Teilchen und Tensid, einen Gewichtsprozentsatz von 0,05-20% Trockensubstanz in der Zusammensetzung ausmacht.

11. Verfahren zum Versehen eines Substrats mit einer Gasbarriereschicht, die in wenigstens einem Beschichtungs- bzw. Streichschritt aufgebracht wird, umfassend Auftragen einer Beschichtungs- bzw. Streichzusammensetzung wie in irgendeinem der Ansprüche 1 bis 10 definiert durch Vorhang-Streichen (Curtain Coating) des Substrats mit der Beschichtungszusammensetzung in wenigstens einem Beschichtungs- bzw. Streichschritt.

12. Beschichtetes bzw. gestrichenes Substrat mit wenigstens einer Gasbarriereschicht (2), erhalten durch Beschichten bzw. Streichen eines Substrats (1) mit einer Beschichtungs- bzw. Streichzusammensetzung, die ein aus Polysacchariden ausgewähltes Polymer und ein Tensid umfasst, wobei die Polysaccharide in Wasser löslich oder dispergierbar oder suspendierbar sind, und das Tensid ein wasserlöslicher nichtionischer ethoxylierter Alkohol ist, **dadurch gekennzeichnet, dass** das Tensid die Formel
RO(CH₂CH₂O)ₓH
hat, wobei:
R = iso-C₁₃H₂₇ und x 8 oder höher ist; oder
R = iso-C₁₀ und x 5, 6, 7, 8 oder 11 ist.

13. Beschichtetes Substrat nach Anspruch 12, wobei die Gasbarriereschicht (2) ein Auftragsgewicht von 0,8 g/m² oder mehr und weniger als 7,0 g/m² aufweist.

14. Beschichtetes Substrat nach irgendeinem der Ansprüche 12 bis 13, wobei das Substrat (1) eine Pappe ist, die wenigstens eine Schicht auf Basis von Fasern umfasst, die mit der Beschichtungs- bzw. Streichzusammensetzung beschichtet bzw. gestrichen ist.

15. Verpackungsmaterial, umfassend eine beschichtete bzw. gestrichene Pappe nach Anspruch 14, weiterhin umfassend eine Schicht (4) aus Polyethylen niedriger Dichte auf jeder Seite der beschichteten Pappe, und mit einem OTR-Wert gemessen bei 23° C und 50% RH mit einem Mocon Ox Tran 2/21 Instrument von weniger als 40 ml/m²_{*}24h_{*}1atm, und vorzugsweise weniger als 10 ml/m²_{*}24h_{*}1 atm.

16. Flüssigkeitsverpackung, hergestellt aus einem Verpackungsmaterial nach Anspruch 15.

## Revendications

1. Composition de couchage formant barrière aux gaz, pouvant être appliquée à la coucheuse à nappe, comprenant un polymère choisi parmi les polysaccharides et un tensioactif, lesdits polysaccharides étant solubles ou dispersibles ou pouvant être mis en suspension dans de l'eau, et le tensioactif étant un alcool éthoxylé non ionique soluble dans l'eau, **caractérisée en ce que** la teneur en extrait sec de la composition est de 4-15 %, et que le tensioactif a la formule RO(CH₂CH₂O)ₓH, dans laquelle R = iso-C₁₃H₁₇ et x vaut 8 ou plus ; ou R=iso-C₁₀ et x vaut 5, 6, 7, 8 ou 11.

2. Composition de couchage selon la revendication 1, comprenant un mélange d'un polysaccharide et de PVOH.

3. Composition de couchage selon l'une quelconque des revendications 1-2, **caractérisée en ce que** les polysaccharides comprennent de l'amidon, des dérivés de l'amidon, du MFC (cellulose microfibrillaire) ou de l'hémicellulose.

4. Composition de couchage selon la revendication 3, **caractérisée en ce que** le polymère comprend un poly(alcool vinylique) dans un mélange avec de l'amidon et/ou un dérivé de l'amidon et/ou du MFC et/ou de l'hémicellulose.

5. Composition de couchage selon la revendication 3, **caractérisée en ce que** le polymère contient uniquement de l'amidon, ou uniquement un dérivé de l'amidon, ou un mélange de ceux-ci, ou l'un ou l'autre en mélange avec du MFC et/ou de l'hémicellulose.

6. Composition de couchage selon la revendication 3, **caractérisée en ce que** le polymère comprend du MFC seul ou de l'hémicellulose seule, ou un mélange de ceux-ci.

7. Composition de couchage selon l'une des revendications précédentes, **caractérisée en ce qu'**elle a une teneur de 0,05 à 2,0 % en poids en le tensioactif alcool éthoxylé non ionique, de préférence de 0,1 à 1,0 % et plus particulièrement de 0,2 à 0,5 % en poids, par rapport au poids total de la composition de couchage absolument sèche.

8. Composition de couchage selon l'une quelconque des revendications précédentes, **caractérisée en ce qu'**elle comprend des particules lamellaires.

9. Composition de couchage selon la revendication 8, **caractérisée en ce qu'**elle comprend de l'argile montmorillonite sous une forme nanoparticulaire.

10. Composition de couchage selon l'une quelconque des revendications précédentes, **caractérisée en ce qu'**elle comprend un pourcentage en poids de 80 à 99,5 % de matière sèche dans la composition constituée d'un polymère choisi comme composant principal, et que la quantité des additifs au composant principal, tels que les autres polymères ou des particules lamellaires et le tensioactif, correspond à un pourcentage en poids de 0,05 à 20 % en poids de matière sèche dans la composition.

11. Procédé de fabrication d'un substrat comportant une couche formant barrière aux gaz appliquée en au moins une étape de couchage, comprenant l'application d'une composition de couchage telle que définie dans l'une quelconque des revendications 1 à 10, par application sur le substrat, à la coucheuse à nappe, de la composition de couchage dans le cadre d'au moins une étape de couchage.

12. Substrat couché ayant au moins une couche (2) formant barrière aux gaz, obtenue par application sur le substrat (1) d'une composition de couchage comprenant un polymère choisi parmi les polysaccharides et un tensioactif, lesdits polysaccharides étant solubles ou dispersibles ou pouvant être mis en suspension dans de l'eau, et le tensioactif étant un alcool éthoxylé non ionique soluble dans l'eau, **caractérisé en ce que** le tensioactif a la formule RO(CH2CH2O)xH, dans laquelle R = iso-C₁₃H₁₇ et x vaut 8 ou plus ; ou R = iso-C₁₀ et x vaut 5, 6, 7, 8 ou 11.

13. Substrat couché selon la revendication 12, dans lequel la couche (2) formant barrière aux gaz a une masse surfacique de 0,8 g/m² ou plus et inférieure à 7,0 g/m².

14. Substrat couché selon l'une quelconque des revendications 12-13, le substrat (1) étant un carton comprenant au moins une couche à base de fibres, revêtue de la composition de couchage.

15. Matériau d'emballage comprenant un carton couché selon la revendication 14, comprenant en outre une couche (4) en polyéthylène basse densité sur chaque face du carton couché, et ayant un OTR, mesuré à 23°C et en présence d'une humidité relative de 50 % avec un instrument Mocon Ox Tran 2/21, inférieur à 40 ml/m².24 h-1 atm et de préférence inférieur à 10 ml/m².24 h-1 atm.

16. Emballage pour liquide, fabriqué à partir d'un matériau d'emballage selon la revendication 15.
